# EUROPÄISCHE PATENTSCHRIFT

(11) **EP 1 294 592 B1**
(45) Veröffentlichungstag und Bekanntmachung des Hinweises auf die Patenterteilung: **02.03.2005**
(21) Anmeldenummer: 01947383.4
(22) Anmeldetag: 21.06.2001
(51) Int. Cl.: B60R 21/26

(54) **KALTGASGENERATOR**
COLD GAS GENERATOR
GENERATEUR DE GAZ FROID

(30) Priorität: 29.06.2000 DE 10031749
(43) Veröffentlichungstag der Anmeldung: 26.03.2003
(73) Patentinhaber: Welz Industrieprodukte GmbH, 70736 Fellbach (DE)
(72) Erfinder: WELZ, Siegfried, 70736 Fellbach (DE)
(74) Vertreter: Wasmuth, Rolf, Dipl.-Ing.
(86) Internationale Anmeldenummer: PCT/EP2001/006992
(87) Internationale Veröffentlichungsnummer: WO 2002/000474

(56) Entgegenhaltungen:
- WO-A-99/12775
- DE-A- 2 237 461
- DE-A- 19 540 618
- US-A- 3 788 596
- US-A- 4 203 616

## Beschreibung

Die Erfindung betrifft einen Kaltgasgenerator für ein Airbag-System mit den Merkmalen nach dem Oberbegriff des Anspruchs 1.

Bekannte Kaltgasgeneratoren weisen einen Speicher auf, in dem zum bedarfsweisen Aufblasen eines Airbags ein Gas unter hohem Druck bei Umgebungstemperatur gespeichert ist. Eine Gasauslaßöffnung ist im Ruhezustand gasdicht verschlossen, so daß der Gasdruck über die Lebensdauer des Kaltgasgenerators gehalten werden kann. Ein bei einem Unfall aktiviertes Steuergerät erzeugt einen Impuls, der eine Auslösevorrichtung betätigt zur Öffnung der Gasauslaßöffnung. Damit strömt das im Speicher bevorratete Gas durch die Gasauslaßöffnung und einen entsprechenden Zuleitungsweg in einen zusammengefalteten Airbag. Der Airbag wird aufgeblasen, wobei sich das Gas mit der einhergehenden Volumenvergrößerung auf einen gewünschten Fülldruck entspannt. Der Wunsch nach Leichtbau im Kraftfahrzeugbau sowie nach verbesserten Sicherheitsvorkehrungen mit gegebenenfalls einer Vielzahl von Airbags und Kaltgasgeneratoren führt zu der Forderung, daß diese klein, leicht und zuverlässig ausgeführt sein müssen. Die kleine Baugröße führt zu einem hohen Speicherdruck des Gases im Speicher, was zu komplexen Anforderungen insbesondere an den Bereich der Gasauslaßöffnung und der Auslösevorrichtung führt. Zum einen muß der Verschluß der Gasauslaßöffnung so gestaltet sein, daß er dem hohen Gasdruck standhält und dabei dauerhaft gasdicht auch unter Berücksichtigung von Diffusionsprozessen ist. Des weiteren muß der Auslösemechanismus so beschaffen sein, daß eine unbeabsichtigte Fehlauslösung vermieden ist und eine gesteuerte Auslösung mit möglichst geringem Energieaufwand erfolgen kann.

Dazu sind aus der DE 195 40 618 A1 verschiedene Anordnungen bekannt, bei denen die Gasauslaßöffnung mit einer gasdichten Folie verschlossen ist. Die gasdichte Folie ist so dimensioniert, daß sie für sich alleine der Druckkraft der Gasfüllung nicht standhalten kann. Eine Abstützeinrichtung stützt im Ruhezustand die Dichtfolie gegen den auf sie wirkenden Gasdruck ab. Die Abstützeinrichtung weist dabei eine an der Dichtfolie anliegende Druckplatte und ein Stützelement auf. Eine pyrotechnische Ladung wirkt bedarfsweise so auf die Abstützeinrichtung, daß ihre Stützwirkung wegfällt. Dabei zerstört der anliegende Gasdruck die Dichtfolie, so daß das gespeicherte Gas in einen Airbag zu dessen Befüllung entweichen kann. In der genannten Druckschrift sind verschiedene Ausführungsbeispiele der Abstützeinrichtung gezeigt, bei denen die Abstützeinrichtung einteilig ausgeführt ist und durch die pyrotechnische Ladung derart plastisch verformt wird, daß ihre Stützwirkung wegfällt. Zur Abstützung der Dichtfolie gegen den hohen Gasdruck muß die Stützeinrichtung entsprechend kräftig dimensioniert sein. Daraus folgt, daß für ihre plastische Verformung ein hoher, durch die pyrotechnische Ladung bereitzustellender Energiebedarf gegeben ist. In einer Variante dazu ist die Druckplatte durch einen Kniehebel abgestützt, dessen Kniegelenk abgewinkelt und seinerseits gegen die pyrotechnische Ladung abgestützt ist. Zum Auslösen muß die pyrotechnische Ladung das Kniegelenk zunächst gegen den anliegenden Gasdruck strecken, was einen hohen Energieaufwand erfordert. Die dauerhafte Abstützung des Kniegelenkes an der pyrotechnischen Ladung verhindert Wartungs- und Inspektionsarbeiten daran; geringe Einbautoleranzen können zu einem unbeabsichtigten Reißen der Dichtfolie führen. In einer weiteren Variante ist die Stützplatte mit einem Stützelement einteilig ausgebildet. Zum öffnen der Gasauslaßöffnung wirkt die pyrotechnische Ladung seitlich darauf, wobei die Stützvorrichtung eine Schwenkbewegung ausführt. Bei dieser Schwenkbewegung muß die dem Auslöser zugewandte Kante der Druckplatte gegen die Dichtfolie und den anliegenden Gasdruck angehoben werden, bevor eine Auslösung erfolgt. Auch hierfür ist ein entsprechend hoher Energiebedarf erforderlich. Die gezeigten Ausführungsbeispiele sind empfindlich gegen Toleranzen im Bereich der Abstützung und der Auslösevorrichtung; geringe Verschiebungen können zu einem unbeabsichtigten Reißen der Dichtfolie führen.

Der Erfindung liegt die Aufgabe zugrunde, einen Kaltgasgenerator mit verbesserter Zuverlässigkeit und verringerter Betätigungsenergie bereitzustellen.

Die Aufgabe wird durch einen Kaltgasgenerator mit den Merkmalen des Anspruchs 1 gelöst.

Dazu wird vorgeschlagen, die Gasauslaßöffnung mit einer Dichtscheibe druckdicht zu verschließen und die Dichtscheibe im Ruhezustand mit einer Stützvorrichtung abzustützen, die aus einer an der Dichtscheibe anliegenden Druckplatte und einem getrennt davon ausgebildeten Stützhebel besteht. Der Stützhebel ist an einer Lagerstelle schwenkbar, in Druckrichtung kraftaufnehmend und quer dazu kraftfrei gelagert. Die zugehörige Auslösevorrichtung ist derart ausgebildet, daß sie im Auslösefalle den Stützhebel um dessen Lagerstelle schwenkt. Durch diese Anordnung ist die Auslösevorrichtung im Ruhezustand nicht durch die Stützvorrichtung belastet. Einbautoleranzen der Auslösevorrichtung haben keinen Einfluß auf die Stützwirkung der Stützvorrichtung. Durch die oben beschriebene Lagerung und Betätigung des Stützhebels führt dessen Betätigung nicht zu einem Anheben der Druckplatte bzw. der Dichtscheibe gegen den anliegenden Gasdruck. Zur Betätigung ist ein nur geringes Energieniveau zur Überwindung der auftretenden Reibkräfte erforderlich. In der Folge kann die Auslösevorrichtung klein gehalten sein, was insbesondere bei Verwendung einer pyrotechnischen Ladung neben der Gewichts- und Raumersparnis auch zu einer Verringerung der Freisetzung von Schadstoffen führt. Das schwenkbare Ende des Stützhebels weist dabei vorteilhaft eine Rundung auf, deren Radius insbesondere etwa dem Abstand des schwenkbaren Endes von der Lagerstelle entspricht. Dadurch kann der Stützhebel einen bestimmten Schwenkweg ausführen, bei dem die Stützwirkung unverändert bleibt. Dies führt zur Ermöglichung großzügiger Lagetoleranzen für den Stützhebel ohne Beeinträchtigung dessen Stützwirkung, was zur Vermeidung von unbeabsichtigten Fehlauslösungen beiträgt. Vorteilhaft ist auch an der Druckplatte eine entsprechend gerundete Vertiefung vorgesehen, in die das gerundete schwenkbare Ende des Stützhebels eingreift. Dadurch ist eine sichere Führung und gegenseitige Justierung gegeben.

Ein statischer Gasdruck wirkt auf eine verschlossene öffnung senkrecht zu dessen Öffnungsebene. Eine senkrecht zur Öffnungsebene und im Flächenschwerpunkt der Öffnung liegende Öffnungsachse gibt deshalb auch die Lage und Ausrichtung der wirkenden Druckkraftresultierenden an. Durch Anordnung der Lagerstelle auf der Öffnungsachse der Gasauslaßöffnung weist die Druckkraftresultierende auf die Lagerstelle, wodurch unsymmetrische Belastungen der Stützvorrichtung vermieden sind, was zur Verringerung des Auslöseenergiebedarfs beiträgt. Dazu trägt ebenfalls die Ausbildung der Lagerstelle des Stützhebels als Achszapfen bei, wodurch die auftretenden Reibkräfte und in der Folge die erforderliche Betätigungsenergie gering gehalten sind.

In einer zweckmäßigen Ausbildung ist die Druckplatte in die Gasauslaßöffnung in bezüglich der öffnungsachse radialer Richtung etwa spielfrei eingepaßt. Dadurch ist eine spielbedingte Beweglichkeit der Druckplatte in radialer Richtung und damit einhergehend eine Gefährdung der empfindlichen Dichtscheibe vermieden. Vorteilhaft weisen dabei die Gasauslaßöffnung und die Druckplatte jeweils etwa achsparallele Umfangswände auf, so daß die Druckplatte über einen definierten axialen Weg unter Vermeidung von Kippen geführt ist. Dies trägt zu einem präzise definierbaren Auslösevorgang bei. Durch das Vermeiden einer Kippbewegung sind auch im Ruhezustand gewisse axiale Lagetoleranzen der Druckplatte zulässig, ohne daß ein unbeabsichtigtes Platzen der Dichtscheibe befürchtet werden muß. Des weiteren übt die Druckscheibe mit ihrer vergleichsweise großen Dicke und spaltfreien Einpassung eine gewisse Dichtwirkung aus. Insbesondere bei einer flächigen Verbindung der Druckplatte mit der Dichtscheibe ist eine Undichtigkeit durch Gasdiffusion vermieden, da die Dichtscheibe nur linienförmig entlang der Umfangswand der Druckplatte dünnwandig ausgebildet ist. Der Bereich der dünnwandigen Ausbildung der Dichtscheibe mit einer entsprechend hohen Gasdiffusionsrate ist also sehr klein gehalten. Des weiteren ergibt sich durch diese Ausbildung eine präzise definierte linienförmige Sollbruchstelle in der Dichtscheibe, wobei bei einer Auslösung die Druckplatte mit dem entsprechenden angebundenen Dichtscheibenteil abgesprengt wird. Die nunmehr geöffnete Gasauslaßöffnung weist in der Folge eine präzise definierte Geometrie mit entsprechend vorhersehbaren Strömungseigenschaften auf. Dadurch lassen sich der Kaltgasgenerator und der zu befüllende Airbag mit verbesserter Präzision konstruktiv aufeinander abstimmen, was zur Betriebssicherheit des Systems beiträgt. Zur präzisen Anpassung des Strömungsverhaltens ist im Strömungsweg des Gases und insbesondere speicherseitig der Gasauslaßöffnung eine Strömungsdrossel vorgesehen. Bei dieser Anordnung wirkt im Ruhezustand der volle statische Druck auf die Gasauslaßöffnung, was ein präzises Zerreißen der Dichtscheibe ermöglicht. Nach dem Öffnen der Gasauslaßöffnung entsteht ein Strömungsvorgang, bei dem durch die Strömungsdrossel ein reduzierter dynamischer Gasdruck entsteht. Insbesondere in Verbindung mit Helium als Gas im Speicher sind damit eine Reihe von Vorteilen erzielbar. Helium weist hervorragende Fließeigenschaften auf, die die Anbindung eines Airbags über eine Leitung entsprechender Länge an den Speicher ermöglicht. Dadurch ist die Positionierung des Speichers an einer vom Airbag entfernten Stelle ermöglicht, was die Montageflexibilität des Airbag-Systems verbessert. Durch die geringe Abhängigkeit von Druck und Temperatur bei Helium kann der Befülldruck des Speichers so gewählt werden, daß einerseits bei tiefen Umgebungstemperaturen eine sichere Befüllung des Airbags ermöglicht ist und andererseits beispielsweise bei intensiver Sonneneinstrahlung der Gasdruck nicht übermäßig ansteigt, womit eine überbeanspruchung des Airbags bei hohen Temperaturen vermieden ist. Des weiteren weist ein mit Helium gefüllter Airbag hervorragende Dämpfungseigenschaften auf, wodurch die Stoßbelastung auf eine zu schützende Person und insbesondere der HIC-Faktor (head injury criterion, Kopfverletzungsfaktor) reduzierbar ist. Die Strömungsdrossel verhindert dabei ein schlagartiges Aufblasen des Airbags und damit einhergehend eine mögliche Überbeanspruchung des Airbagmaterials.

In einer vorteilhaften Ausbildung ist ein insbesondere einteilig ausgeführtes Gehäuse vorgesehen, in welchem die Gasauslaßöffnung, die Stützvorrichtung und gegebenenfalls auch die Strömungsdrossel angeordnet sind. Das Gehäuse ist zweckmäßig mit dem Speicher gasdicht verschweißt. Dadurch ist in einem gut kontrollierbaren Fertigungsprozeß eine genaue Ausrichtung und Abstützung der Einzelteile gegeneinander ermöglicht. Durch die Einteiligkeit des Gehäuses sind wegen der hohen auftretenden Kräfte mögliche Versetzungserscheinungen vermieden. In kostensparender Weise kann das Gehäuse beispielsweise erst nach der Vormontage an den Speicher angeschweißt werden.

Vorteilhaft weist der Stützhebel einen bezüglich der Öffnungsachse abgewinkelten Klinkenhebel auf, wobei die Auslösevorrichtung achsparallel und seitlich versetzt zur öffnungsachse bzw. zur Lagerstelle auf den Klinkenhebel wirkend angeordnet ist. Durch den Klinkenhebel ist eine Umlenkungseinrichtung derart gegeben, daß zur Betätigung des schwenkbaren Endes quer zur Druckrichtung eine Betätigungsrichtung parallel zur Öffnungsachse gegeben ist. Dadurch kann auch die Auslösevorrichtung parallel zur Öffnungsachse angeordnet werden, wodurch eine insgesamt langgestreckte, schlanke Bauform des Kaltgasgenerators ermöglicht ist. Dies trägt zur universellen Platzierbarkeit eines entsprechenden Kaltgasgenerators auch in beengten Stellen eines Kraftfahrzeuges bei. Die schlanke Bauform wird unterstützt durch eine Auslösevorrichtung mit einem in einer Aufnahme längsverschieblich geführten Schlagkolben. Durch die Längsverschieblichkeit des Kolbens kann im Vergleich zu schwenkoder drehbaren Systemen eine schlanke Bauform gewählt werden. Der Schlagkolben ist dabei bevorzugt in der Aufnahme durch einen Klemmring gehalten. Der Klemmring wirkt als Montagehilfe und hält den Schlagkolben in seiner Ruheposition, ohne daß eine Abstützung durch den Stützhebel erforderlich ist. Zur Erzeugung einer hohen Energiedichte und damit einhergehend eines geringen Platz- und Gewichtsbedarfes ist zur Betätigung des Schlagkolbens eine pyrotechnische Treibladung vorgesehen. Die Treibladung ist gemeinsam mit dem Schlagkolben in der Aufnahme gehalten und durch einen Haltering gegen Herausrutschen gesichert. Der Haltering ist zweckmäßig elastisch ausgeführt, so daß er bei der Zündung der Treibladung als Dichtung wirken kann. Zur weiteren Reduzierung des Platzbedarfes bildet der Schlagkolben einen innenseitigen, von einem Kolbenhemd und einem Kolbenboden teilweise umschlossenen Kolbenraum. In diesen Kolbenraum ragt die pyrotechnische Treibladung hinein, so daß eine insgesamt kompakte Bauweise entsteht.

Der Schlagkolben und auch der Klinkenhebel können zweckmäßig je eine ebene, in Ruhezustand zueinander abgewinkelte Anschlagfläche aufweisen. Beim Aufprall des Schlagkolbens auf die geneigte Anschlagfläche des Klinkenhebels führt dieser eine Schwenkbewegung soweit aus, bis beide Anschlagflächen eben aneinander liegen. In diesem Zustand wird die Drehbewegung des Klinkenhebels abgebremst, so daß dieser in einer definierten Position verharrt, ohne das Ausströmen des Gases negativ zu beeinflussen. In einer weiteren zweckmäßigen Ausbildung weist der Schlagkolben eine gekrümmte Anschlagfläche auf, die in Verbindung mit dem schwenkenden Klinkenhebel auf diesem abrollen kann. Dadurch werden insgesamt die auftretenden Reibungsverluste verringert, was zur weiteren Einsparung des Energiebedarfes und damit zur Verkleinerung der Auslösevorrichtung beiträgt. Dabei kann es zweckmäßig sein, die Anschlagfläche des Schlagkolbens kleiner als die Kolbenfläche auszubilden. Durch die relativ große Kolbenfläche ist eine hohe Kolbenkraft erzielbar; die demgegenüber verkleinerte Anschlagfläche kann gegebenenfalls bei entsprechenden räumlichen Verhältnissen eine verbesserte Beweglichkeit des Stützhebels bzw. des Klinkenhebels zulassen.

Ausführungsbeispiele der Erfindung werden im folgenden anhand der Zeichnung näher beschrieben. Es zeigen:
- Fig. 1: in einer übersichtsdarstellung einen Kaltgasgenerator mit seinen wesentlichen Komponenten;
- Fig. 2: eine Ausschnittsvergrößerung der Fig. 1 mit Einzelheiten der Gasauslaßöffnung;
- Fig. 3: eine Ausschnittsvergrößerung der Fig. 1 mit Einzelheiten der Auslösevorrichtung;
- Fig. 4: eine Variante der Auslösevorrichtung nach Fig. 1 und 3 mit einer ebenen Anschlagfläche des Anschlagkolbens;
- Fig. 5: die Anordnung nach Fig. 4 mit einer betätigten Auslösevorrichtung und einer geöffneten Gasauslaßöffnung.

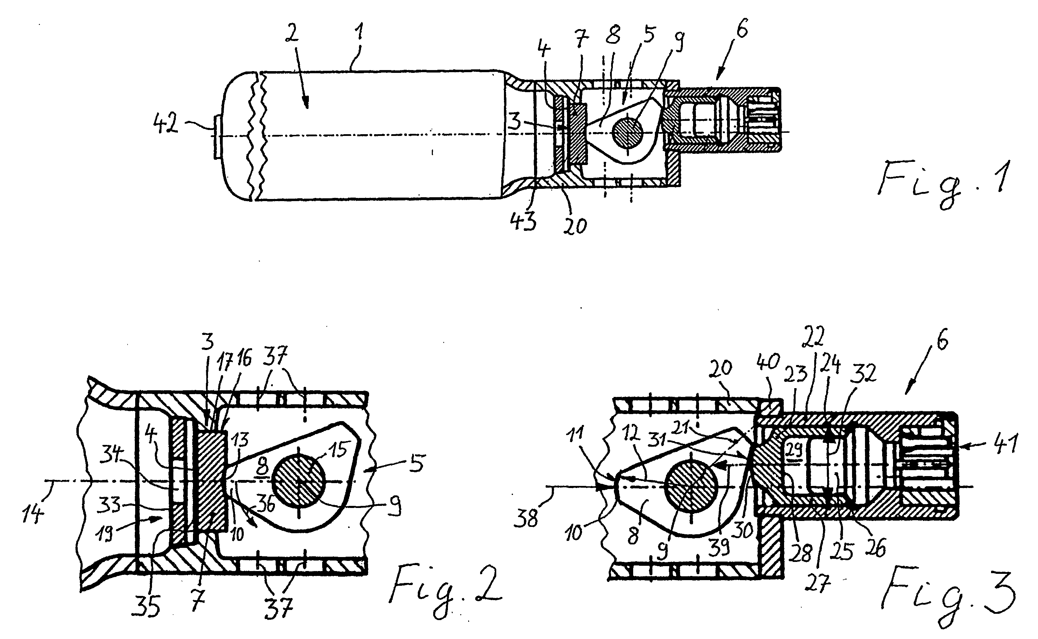

Fig. 1 zeigt in einer Ausschnittsdarstellung einen Kaltgasgenerator mit einem Speicher 1, der über ein Befüllventil 42 mit einem Gas 2 unter hohem Druck gefüllt ist. Das Gas 2 ist Helium und kann auch ein anderes geeignetes Gas sein. Der Kaltgasgenerator weist eine Gasauslaßöffnung 3 auf, die durch eine Dichtscheibe 4 gasdicht verschlossen ist. Die Dichtscheibe 4 ist gegen den anliegenden Gasdruck durch eine Stützvorrichtung 5 abgestützt. Es ist eine Auslösevorrichtung 6 vorgesehen, die bedarfsweise auf die Stützvorrichtung 5 derart wirkt, daß die Abstützung der Dichtscheibe 4 entfällt. Dabei wird durch den Druck des Gases 2 die Dichtscheibe 4 zerstört, so daß das Gas 2 durch die Gasauslaßöffnung 3 in einen nicht dargestellten Airbag zu dessen Befüllung einströmen kann. Die Stützvorrichtung 5 umfaßt eine an der Dichtscheibe 4 anliegende Druckplatte 7 und eine die Druckplatte 7 gemeinsam mit der Dichtscheibe 4 abstützenden Stützhebel 8, der seinerseits gegen eine Lagerstelle 9 abgestützt ist. Die Gasauslaßöffnung 3 und die Stützvorrichtung 5 sind in einem einteiligen Gehäuse 20 vorgesehen, welches entlang einer ringförmigen Schweißnaht 43 gasdicht mit dem Speicher 1 verschweißt ist.

Fig. 2 zeigt in einer vergrößerten Darstellung Einzelheiten des Kaltgasgenerators nach Fig. 1 im Bereich der Gasauslaßöffnung 3 mit ihrer mittigen Öffnungsachse 14. Die Druckplatte 7 ist in radialer Richtung bezüglich der Öffnungsachse 14 spielfrei in die Gasauslaßöffnung 3 eingepaßt, wobei beide zur Öffnungsachse 14 achsparallele verlaufende Umfangswände 16, 17 aufweisen. Die Druckplatte 7 ist mit der Dichtscheibe 4 flächig verbunden, wodurch gemeinsam mit der zumindest näherungsweise spielfreien Einpassung der Druckplatte 7 in die Gasauslaßöffnung 3 eine ringförmig verlaufende Sollbruchstelle 35 in der Dichtscheibe 4 gebildet ist. Speicherseitig der Gasauslaßöffnung 3 ist eine Strömungstrommel 19 in Form einer Drosselplatte 33 mit einer mittigen Drosselbohrung 34 vorgesehen. Die auf die verschlossene Gasauslaßöffnung 3 wirkende Gasdruckkraft verläuft entlang der Öffnungsachse 14, auf der die Lagerstelle 9 in Form eines Achszapfens 15 liegt. Der Stützhebel 8 ist in Richtung der Öffnungsachse 24 gegen den Achszapfen 15 abgestützt, wobei sein schwenkbares Ende 10 quer dazu kraftfrei ist und durch die Auslösevorrichtung 6 (Fig. 1) in Richtung des Pfeils 36 verschwenkbar ist. Es kann auch eine Ausführung zweckmäßig sein, bei der die Druckplatte 7 einseitig gelenkig gelagert ist und außermittig gegenüberliegend durch eine vergleichbare Stützvorrichtung 5 gehalten ist. Das schwenkbare Ende 10 des Stützhebels 8 ist gerundet und greift in eine entsprechend gerundete Vertiefung 13 der Druckplatte 7 ein. In dem einteiligen Gehäuse 20 sind vier Ausströmöffnungen 37 vorgesehen, über die das Gas 2 (Fig. 1) im Auslösefall dem zu befüllenden Airbag zugeleitet wird.

Fig. 3 zeigt eine weitere Ausschnittsdarstellung des Kaltgasgenerators nach Fig. 1 im Bereich der Auslösevorrichtung 6. Diese besteht aus einer Aufnahme 22, in der ein Schlagkolben 23 in einer Betätigungsrichtung 39 längsverschieblich geführt ist. Der Schlagkolben 23 ist in seiner Aufnahme 22 mittels eines umlaufenden Klemmringes 24 gegen Verrutschen gehalten. Der Schlagkolben 23 bildet mit seinem Kolbenhemd 27 und seinem Kolbenboden 28 einen innenliegenden Kolbenraum 29, in den eine pyrotechnische Treibladung 25 hineinragt. Die Treibladung 25 ist in der Aufnahme 22 durch einen elastischen Haltering 26 dichtend gehalten. An dem dem Schlagkolben 23 abgewandten Ende der Auslösevorrichtung 6 sind elektrische Anschlußkontakte 41 zur bedarfsweisen Zündung der pyrotechnischen Treibladung 25 vorgesehen. Die Aufnahme 22 ist in einer Befestigungsplatte 40 gehalten, die ihrerseits am Gehäuse 20 befestigt ist. Im Gehäuse 20 ist der Stützhebel 8 an einer Lagerstelle 9 derart schwenkbar gelagert, daß die auf ihn entlang der öffnungsachse 14 (Fig. 2) wirkende, durch den Pfeil 38 angedeutete Druckkraft auf die Lagerstelle 9 wirkt, ohne dabei eine Kraftkomponente senkrecht dazu in Schwenkrichtung 36 (Fig. 2) aufzuweisen. Die durch den Pfeil 38 dargestellte Druckkraft wirkt etwa mittig auf das schwenkbare Ende 10 des Stützhebels 8, welches eine Rundung 11 mit einem Radius 12 aufweist, der etwa dem Abstand des schwenkbaren Endes 10 zur Lagerstelle 9 entspricht. Auf seiner dem schwenkbaren Ende 10 abgewandten Seite weist der Stützhebel 8 einen bezüglich der Druckrichtung 38 abgewinkelten Klinkenhebel 21 auf, auf den bedarfsweise die Auslösevorrichtung 6 wirkt. Es kann auch eine Anordnung zweckmäßig sein, bei der die Auslösevorrichtung 6 direkt seitlich auf das schwenkbare Ende 10 wirkend angeordnet ist. Ebenfalls kann es zweckmäßig sein, daß der Klinkenhebel 21 ohne Abwinkelung ausgebildet ist, wobei dann die Auslösevorrichtung 6 mit ihrer Betätigungsrichtung 39 winklig zur Druckrichtung 38 angeordnet ist. Im gezeigten Ausführungsbeispiel liegt die Betätigungsrichtung 39 achsparallel zur Druckrichtung 38 bzw. zur Öffnungsachse 14 (Fig. 2) und seitlich versetzt dazu, woraus ein Hebelarm der in der Betätigungsrichtung 39 an den Klinkenhebel 21 anlegbaren Kolbenkraft um die Lagerstelle 9 folgt. Der Klinkenhebel 21 liegt mit einer ebenen Anschlagfläche 31 an einer gekrümmten Anschlagfläche 30 des Schlagkolbens 23 in Ruheposition im wesentlichen kraftfrei an. Durch die Krümmung der kolbenseitigen Anschlagfläche 30 kann diese im Auslösefall an der ebenen Anschlagfläche 31 abrollen. Zur Unterstützung der freien Beweglichkeit des Stützhebels 8 im Auslösefall ist dabei die Anschlagfläche 30 kleiner als die durch den Doppelpfeil 32 angedeutete Kolbenfläche.

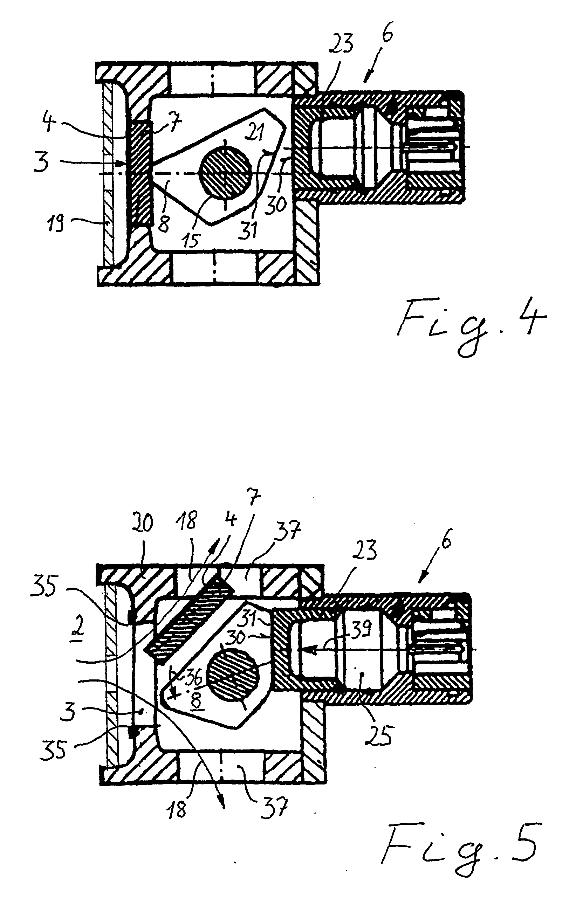

Fig. 4 zeigt eine Variante der Anordnung nach Fig. 3, bei der der Schlagkolben 23 in Ruheposition gezeigt ist und zum Klinkenhebel 21 beabstandet ist. Der Klinkenhebel 21 und der Schlagkolben 23 weisen jeweils eine winklig zueinander angeordnete ebene Anschlagfläche 30, 31 auf. In Fig. 5 ist die Anordnung nach Fig. 4 im ausgelösten Zustand gezeigt, bei der der Schlagkolben 23 in seiner Betätigungsrichtung 39 durch Zündung der pyrotechnischen Treibladung 25 nach vorne gedrückt ist. Dadurch hat der Stützhebel 8 eine Schwenkbewegung in Richtung des Pfeils 36 ausgeführt, wobei die beiden Anlageflächen 30, 31 bündig aneinander liegen und ein Weiterdrehen des Stützhebels 8 abgebremst ist. Durch den Druck des Gases 2 ist die Druckplatte 7 mit einem Teilstück der Dichtscheibe 4 aus der Gasauslaßöffnung herausgedrückt, wobei die Dichtscheibe 4 entlang einer ringförmigen Sollbruchstelle 35 abgeschert ist. Das Gas 2 entweicht entlang dem durch die Pfeile 18 dargestellten Strömungsweg durch die Gasauslaßöffnung 3 und zwei im Gehäuse 20 angeordnete Ausströmrichtungen 37 in Richtung eines nicht dargestellten Airbags. Im Strömungsweg 18 des Gases 2 ist eine angedeutete Strömungsdrossel 19 angeordnet, die im gezeigten Ausführungsbeispiel speicherseits der Gasauslaßöffnung 3 liegt. Es kann auch zweckmäßig sein, die Ausströmöffnungen 37 als Strömungsdrossel 19 auszubilden oder eine oder mehrere separate Strömungsdrosseln 19 in nicht dargestellten Zuführleitungen zum Airbag anzuordnen.

## Patentansprüche

1. Kaltgasgenerator für ein Airbag-System mit einem Speicher (1), der mit einem Gas (2) unter Druck gefüllt ist, mit einer Gasauslaßöffnung (3), die im Ruhezustand mit einer dünnwandigen Dichtscheibe (4) druckdicht verschlossen ist, mit einer Stützvorrichtung (5) zur Abstützung der Dichtscheibe (4) gegen den auf sie wirkenden Gasdruck und einer Auslösevorrichtung (6) zur Beeinflussung der Stützvorrichtung (5), wobei die Stützvorrichtung (5) eine an der Dichtscheibe (4) anliegende Druckplatte (7) und einen die Druckplatte (7) gemeinsam mit der Dichtscheibe (4) abstützenden Stützhebel (8) umfaßt, und
daß die Druckplatte (7) und der Stützhebel (8) getrennt voneinander ausgebildet sind, **dadurch gekennzeichnet,**
**daß** der Stützhebel (8) an einer Lagerstelle (9) schwenkbar gelagert ist,
**daß** der Stützhebel (8) in Druckrichtung kraftaufnehmend an der Lagerstelle (9) gelagert ist,
**daß** der Stützhebel (8) quer zur Druckrichtung kraftfrei gelagert ist,
und **daß** die Auslösevorrichtung (6) auf den Stützhebel (8) um die Lagerstelle (9) schwenkend wirkt.

2. Kaltgasgenerator nach Anspruch 1,
**dadurch gekennzeichnet, daß** der Stützhebel (8) an seinem schwenkbaren Ende (10) eine Rundung (11) aufweist, deren Radius (12) insbesondere etwa dem Abstand des schwenkbaren Endes (10) von der Lagerstelle (9) entspricht.

3. Kaltgasgenerator nach Anspruch 2,
**dadurch gekennzeichnet, daß** das schwenkbare Ende (10) in eine entsprechend gerundete Vertiefung (13) der Druckplatte (7) eingreift.

4. Kaltgasgenerator nach einem der Ansprüche 1 bis 3,
**dadurch gekennzeichnet, daß** die Lagerstelle (9) auf der Öffnungsachse (14) der Gasauslaßöffnung (3) liegt.

5. Kaltgasgenerator nach einem der Ansprüche 1 bis 4,
**dadurch gekennzeichnet, daß** die Lagerstelle (9) durch einen Achszapfen (15) gebildet ist.

6. Kaltgasgenerator nach einem der Ansprüche 1 bis 5,
**dadurch gekennzeichnet, daß** die Druckplatte (7) in die Gasauslaßöffnung (3) in bezüglich der Öffnungsachse (14) radialer Richtung weitgehend spielfrei eingepaßt ist.

7. Kaltgasgenerator nach Anspruch 6,
**dadurch gekennzeichnet, daß** die Gasauslaßöffnung (3) und die Druckplatte (7) etwa achsparallele Umfangswände (16, 17) aufweisen.

8. Kaltgasgenerator nach einem der Ansprüche 1 bis 7,
**dadurch gekennzeichnet, daß** die Dichtscheibe (4) und die Druckplatte (7) flächig miteinander verbunden sind.

9. Kaltgasgenerator nach einem der Ansprüche 1 bis 8,
**dadurch gekennzeichnet, daß** im Strömungsweg (18) des Gases (2) und insbesondere speicherseitig der Gasauslaßöffnung (3) eine Strömungsdrossel (19) vorgesehen ist.

10. Kaltgasgenerator nach einem der Ansprüche 1 bis 9,
**dadurch gekennzeichnet, daß** die Gasauslaßöffnung (3) und die Stützvorrichtung (5) in einem bevorzugt einteiligen Gehäuse (20) vorgesehen sind.

11. Kaltgasgenerator nach Anspruch 10,
**dadurch gekennzeichnet, daß** das Gehäuse (20) mit dem Speicher (1) gasdicht verschweißt ist.

12. Kaltgasgenerator nach einem der Ansprüche 1 bis 11,
**dadurch gekennzeichnet, daß** der Stützhebel (8) einen bezüglich der Öffnungsachse (14) abgewinkelten Klinkenhebel (21) aufweist, und daß die Auslösevorrichtung (6) achsparallel und seitlich versetzt zur öffnungsachse (14) auf den Klinkenhebel (20) wirkend angeordnet ist.

13. Kaltgasgenerator nach einem der Ansprüche 1 bis 12,
**dadurch gekennzeichnet, daß** die Auslösevorrichtung (6) einen in einer Aufnahme (22) längsverschieblich geführten, auf den Stützhebel (8) wirkenden Schlagkolben (23) aufweist.

14. Kaltgasgenerator nach Anspruch 13,
**dadurch gekennzeichnet, daß** der Schlagkolben (23) durch einen Klemmring (24) in der Aufnahme (22) gehalten ist.

15. Kaltgasgenerator nach Anspruch 13 oder 14,
**dadurch gekennzeichnet, daß** der Schlagkolben (23) durch eine in der Aufnahme (22) angeordnete pyrotechnische Treibladung (25) betätigbar ist.

16. Kaltgasgenerator nach Anspruch 15,
**dadurch gekennzeichnet, daß** die pyrotechnische Treibladung (25) durch einen insbesondere elastisch ausgeführten Haltering (26) gehalten ist.

17. Kaltgasgenerator nach Anspruch 15 oder 16,
**dadurch gekennzeichnet, daß** der Schlagkolben (23) einen innenseitigen, von einem Kolbenhemd (27) und einem Kolbenboden (28) teilweise umschlossenen Kolbenraum (29) bildet, in den die pyrotechnische Treibladung (25) hineinragt.

18. Kaltgasgenerator nach einem der Ansprüche 12 bis 17,
**dadurch gekennzeichnet, daß** der Schlagkolben (23) und der Klinkenhebel (21) je eine ebene, im Ruhezustand zueinander abgewinkelte Anschlagfläche (30, 31) aufweisen.

19. Kaltgasgenerator nach einem der Ansprüche 12 bis 17,
**dadurch gekennzeichnet, daß** der Schlagkolben (23) eine gekrümmte, auf dem Klinkenhebel (21) abrollbare Anschlagfläche (30) aufweist.

20. Kaltgasgenerator nach Anspruch 18 oder 19,
**dadurch gekennzeichnet, daß** die Anschlagfläche (30) des Schlagkolbens (23) kleiner als seine Kolbenfläche (32) ist.

21. Kaltgasgenerator nach einem der Ansprüche 1 bis 20,
**dadurch gekennzeichnet, daß** das Gas (2) Helium ist.

## Claims

1. Cold-gas generator for an airbag system, with a reservoir (1) filled with a gas (2) under pressure, with a gas outlet port (3) pressure-sealed in the non-operative state by a thin-walled sealing washer (4), with a supporting device (5) for the support of the sealing washer (4) against the gas pressure acting on it, and with a tripping device (6) for influencing the supporting device (5), the supporting device (5) comprising a pressure plate (7) bearing against the sealing washer (4) and a supporting lever (8) supporting the pressure plate (7) together with the sealing washer (4), and the pressure plate (7) and the supporting lever (8) being designed as separate components,
**characterised in that**
the supporting lever (8) is pivotably mounted in a bearing position (9)
**in that** the supporting lever (8) is mounted in the bearing position (9) to take up forces in the direction of pressure,
**in that** the supporting lever (8) is mounted force-free at right angles to the direction of pressure,
and **in that** the tripping device (6) acts on the supporting lever (8) to pivot it about the bearing point (9).

2. Cold gas generator according to claim 1
**characterised in that** the swivelling end (10) of the supporting lever (8) is provided with a curvature (11), the radius (12) of which, in particular, approximately corresponds to the distance between the swivelling end (10) and the bearing point (9).

3. Cold gas generator according to claim 2,
**characterised in that** the swivelling end (10) engages a recess (13) of corresponding curvature in the pressure plate (7).

4. Cold gas generator according to any of claims 1 to 3,
**characterised in that** the bearing point (9) lies on the port axis (14) of the gas outlet port (3).

5. Cold gas generator according to any of claims 1 to 4,
**characterised in that** the bearing point (9) is represented by a trunnion (15).

6. Cold gas generator according to any of claims 1 to 5,
**characterised in that** the pressure plate (7) is fitted into the gas outlet port (3) largely without play in the radial direction relative to the port axis (14).

7. Cold gas generator according to claim 6,
**characterised in that** the gas outlet port (3) and the pressure plate (7) have approximately axially parallel circumferential walls (16,17).

8. Cold gas generator according to any of claims 1 to 7,
**characterised in that** the sealing washer (4) and the pressure plate (7) are joined at their surfaces.

9. Cold gas generator according to any of claims 1 to 8,
**characterised in that** a flow restrictor (19) is provided in the flow path (18) of the gas (2) and in particular on the reservoir side of the gas outlet port (3).

10. Cold gas generator according to any of claims 1 to 9,
**characterised in that** the gas outlet port (3) and the supporting device (5) are located in a preferably one-part housing (20).

11. Cold gas generator according to claim 10,
**characterised in that** the housing (20) is joined to the reservoir (1) by a gas-tight weld.

12. Cold gas generator according to any of claims 1 to 11,
**characterised in that** the supporting lever (8) incorporates an angled pawl (21) and **in that** the tripping device (6) is arranged axially parallel to and laterally offset relative to the port axis (14) to act on the pawl (20).

13. Cold gas generator according to any of claims 1 to 12,
**characterised in that** the tripping device (6) incorporates a percussion piston (23) guided for longitudinal movement in a housing (22) and acting on the supporting lever (8).

14. Cold gas generator according to claim 13,
**characterised in that** the percussion piston (23) is retained in the housing (22) by a clamping ring (24).

15. Cold gas generator according to claim 13 or 14,
**characterised in that** the percussion piston (23) is operated by a pyrotechnic propellant charge (25) located in the housing (22).

16. Cold gas generator according to claim 15,
**characterised in that** the pyrotechnic propellant charge (25) is retained by an, in particular, elastic retaining ring (26).

17. Cold gas generator according to claim 15 or 16,
**characterised in that** the percussion piston (23) forms an interior piston chamber (29) partially enclosed by a piston skirt (27) and a piston head (28), into which the pyrotechnic propellant charge (25) projects.

18. Cold gas generator according to any of claims 12 to 17,
**characterised in that** the percussion piston (23) and the pawl (21) have flat stop surfaces (30, 31) which are angled relative to one another in the non-operative state.

19. Cold gas generator according to any of claims 12 to 17,
**characterised in that** the percussion piston (23) has a curved stop surface (30) capable of rolling on the pawl (21).

20. Cold gas generator according to claim 18 or 19,
**characterised in that** the stop surface (30) of the percussion piston (23) is smaller than its piston surface (32).

21. Cold gas generator according to any of claims 1 to 20,
**characterised in that** the gas (2) is helium.

## Revendications

1. Générateur de gaz froid pour un système d'airbag comprenant un réservoir (1), qui est rempli sous pression avec un gaz (2), une ouverture de sortie de gaz (3), qui est fermée de façon étanche à la pression dans l'état de repos avec une rondelle d'étanchéité (4) à paroi mince, un dispositif de support (5) pour le soutien de la rondelle d'étanchéité (4) contre la pression de gaz agissant sur elle et un dispositif de déclenchement (6) pour influencer le dispositif de support (5), le dispositif de support (5) comprenant une plaque de pression (7) s'appuyant sur la rondelle d'étanchéité (4) et un levier de support (8) soutenant la plaque de pression (7) conjointement avec la rondelle d'étanchéité (4), la plaque de pression (7) et le levier de support (8) étant conçus séparément l'un de l'autre, **caractérisé en ce que** le levier de support (8) est logé de façon pivotante sur un point de palier (9), **en ce que** le levier de support (8) est logé sur le point de palier (9) dans le sens de pression en absorbant la force, **en ce que** le levier de support (8) est logé sans force transversalement au sens de pression et **en ce que** le dispositif de déclenchement (6) agit sur le levier de support (8) en pivotant autour du point de palier (9).

2. Générateur de gaz froid selon la revendication 1, **caractérisé en ce que** le levier de support (8) présente sur son extrémité (10) pivotante un arrondi (11), dont le rayon (12) correspond en particulier à peu près à la distance entre l'extrémité (10) pivotante et le point de palier (9).

3. Générateur de gaz froid selon la revendication 2, **caractérisé en ce que** l'extrémité (10) pivotante s'engage dans une cavité (13) arrondie de façon appropriée de la plaque de pression (7).

4. Générateur de gaz froid selon l'une quelconque des revendications 1 à 3, **caractérisé en ce que** le point de palier (9) est disposé sur l'axe d'ouverture (14) de l'ouverture de sortie de gaz (3).

5. Générateur de gaz froid selon l'une quelconque des revendications 1 à 4, **caractérisé en ce que** le point de palier (9) est formé par un pivot d'axe (15).

6. Générateur de gaz froid selon l'une quelconque des revendications 1 à 5, **caractérisé en ce que** la plaque de pression (7) est emboîtée largement sans jeu dans l'ouverture de sortie de gaz (3) dans une direction radiale par rapport à l'axe d'ouverture (14).

7. Générateur de gaz froid selon la revendication 6, **caractérisé en ce que** l'ouverture de sortie de gaz (3) et la plaque de pression (7) présentent des parois périphériques (16, 17) à peu près parallèles entre elles.

8. Générateur de gaz froid selon l'une quelconque des revendications 1 à 7, **caractérisé en ce que** la rondelle d'étanchéité (4) et la plaque de pression (7) sont reliées entre elles en surface.

9. Générateur de gaz froid selon l'une quelconque des revendications 1 à 8, **caractérisé en ce qu'**un clapet d'écoulement (19) est prévu dans le trajet d'écoulement (18) du gaz (2) et en particulier côté réservoir de l'ouverture de sortie de gaz (3).

10. Générateur de gaz froid selon l'une quelconque des revendications 1 à 9, **caractérisé en ce que** l'ouverture de sortie de gaz (3) et le dispositif de support (5) sont prévus dans un boîtier (20) de préférence d'une seule pièce.

11. Générateur de gaz froid selon la revendication 10, **caractérisé en ce que** le boîtier (20) est soudé de façon étanche au gaz avec le réservoir (1).

12. Générateur de gaz froid selon l'une quelconque des revendications 1 à 11, **caractérisé en ce que** le levier de support (8) présente un levier à cliquet (21) coudé par rapport à l'axe d'ouverture (14), et **en ce que** le dispositif de déclenchement (6) est disposé de façon parallèle et décalé sur le côté par rapport à l'axe d'ouverture (14) en agissant sur le levier à cliquet (20).

13. Générateur de gaz froid selon l'une quelconque des revendications 1 à 12, **caractérisé en ce que** le dispositif de déclenchement (6) présente un piston percuteur (23) guidé de façon longitudinale dans un logement (22) et agissant sur le levier de support (8).

14. Générateur de gaz froid selon la revendication 13, **caractérisé en ce que** le piston percuteur (23) est maintenu par une bague de serrage (24) dans le logement (22).

15. Générateur de gaz froid selon la revendication 13 ou 14, **caractérisé en ce que** le piston percuteur (23) peut être actionné par une charge propulsive (25) pyrotechnique disposée dans le logement (22).

16. Générateur de gaz froid selon la revendication 15, **caractérisé en ce que** la charge propulsive (25) pyrotechnique est maintenue par une bague de retenue (26) conçue en particulier de façon élastique.

17. Générateur de gaz froid selon la revendication 15 ou 16, **caractérisé en ce que** le piston percuteur (23) forme un compartiment de piston (29) côté intérieur, entouré partiellement par une chemise de piston (27) et un fond de piston (28), compartiment dans lequel dépasse la charge propulsive (25) pyrotechnique.

18. Générateur de gaz froid selon l'une quelconque des revendications 12 à 17, **caractérisé en ce que** le piston percuteur (23) et le levier à cliquet (21) présentent respectivement une surface d'appui (30, 31) plane et coudée dans l'état de repos par rapport aux autres éléments.

19. Générateur de gaz froid selon l'une quelconque des revendications 12 à 17, **caractérisé en ce que** le piston percuteur (23) présente une surface d'appui (30) incurvée et pouvant se dérouler sur le levier à cliquet (21).

20. Générateur de gaz froid selon la revendication 18 ou 19, **caractérisé en ce que** la surface d'appui (30) du piston percuteur est inférieure à sa surface de piston (32).

21. Générateur de gaz froid selon l'une quelconque des revendications 1 à 20, **caractérisé en ce que** le gaz (2) est de l'hélium.
